# DEMANDE DE BREVET EUROPEEN

(11) **EP 1 097 865 A1**
(43) Date de publication de la demande: **09.05.2001**
(21) Numéro de dépôt: 00402776.9
(22) Date de dépôt: 09.10.2000
(51) Int. Cl.: B64G 1/64, B64G 1/44

(54) **Dispositif de maintien et d'amortissement de choc et système d'arrimage temporaire équipé d'un tel dispositif**

(30) Priorité: 04.11.1999 FR 9913798
(71) Demandeur: ALCATEL, 75008 Paris (FR)
(72) Inventeur: Viale, Daniel, 83440 Tanneron (FR)
(74) Mandataire: Smith, Bradford Lee

(57) **Abrégé**

Le système comporte un organe de retenue (11) traversant un élément et relié d'un côté à une structure et en appui, de l'autre côté, sur un côté externe de l'élément ; des moyens (13) pour désolidariser l'organe (11) de ladite structure, pour faire passer l'élément d'une position repliée à une position déployée ; et des moyens moteurs (24) pour tirer vers le côté externe la partie correspondante de l'organe (11), après action desdits moyens de désolidarisation (13).

Il est caractérisé par un dispositif ayant un fût (26) recevant concentriquement l'organe (11), des découpes dans la paroi du fût (26), formant des languettes élastiques (28) pouvant être repliées en tout ou partie vers l'intérieur du fût (26), pour venir en contact avec ladite partie, un renflement (25) de cette dernière étant adapté à coopérer avec lesdites languettes pour maintenir l'organe (11) après action des moyens moteurs (24).

Application : Panneaux solaires d'engin spatial.

## Description

La présente invention a trait, d'une manière générale, à l'arrimage d'un ensemble articulé d'éléments sur un engin spatial et au déploiement de ces éléments.

On sait que, sur les engins spatiaux, sont arrimés des ensembles articulés d'éléments, tels que panneaux de générateurs solaires, antennes, radiateurs thermiques, bras d'éloignement, ...

On entend ici par "panneaux" de générateur solaire, l'ensemble des structures planes de ce dernier, présentant des surfaces actives optiques, thermiques ou photovoltaïques, et notamment :
- des panneaux supports d'un réseau de cellules photovoltaïques identiques ou différentes, transformant l'énergie solaire en énergie électrique ;
- des panneaux réflecteurs qui concentrent le rayonnement solaire sur les précédents grâce à un revêtement aux propriétés adéquates ;
- des panneaux utilisés pour leurs caractéristiques thermo-optiques de surface (radiateurs thermiques).

Au cours du transfert du sol vers une orbite base de transfert que le véhicule spatial va parcourir avant d'être mis sur orbite géostationnaire, voire du sol jusqu'à cette orbite géostationnaire, les éléments sont repliés et appliqués contre le corps du véhicule spatial dans une configuration appelée "configuration de gerbage".

La mise en service opérationnelle de ces éléments, par exemple lorsque le véhicule est un satellite mis sur son orbite de service, impose d'amener chaque élément en position déployée par rapport au corps du véhicule : on parle alors de "dégerbage".

On utilise habituellement des systèmes d'arrimage comportant au moins un organe de retenue traversant chaque élément.

Un tel système est notamment décrit dans le brevet DE-A-3 106 099. Afin qu'un tel organe n'endommage pas lesdits éléments en rentrant en contact avec eux lors de leu déploiement, ce documen t de l'état de la technique propose de déplacer vers l'extérieur l'organe de retenue, préalablement sectionné, de facon à le dégager desdits éléments repliés. A cet effet, des moyens élastiques mo teurs sont disposés entre l'élément externe de l'ensemble articulé et l'organ de retenue. Dans la position repliée de l'ensemble d'éléments, ces m yens élastiques moteurs sont bandés, mais empêchés de se détendre grâc à l'organe de retenue. Par contre, suite à la rupture de l'organe de retenue les moyens élastiques se détendent pour déplacer l'organe de retenue et pour l'amener dans une position dans laquelle il est dégagé desdits éléments.

Dans des systèmes s milaires, afin d'amortir le choc dû à l'éjection de l'organe de retenue après sectionnement, il est prévu que l'organe de retenue soit projeté sur un amortisseur à structure en nid d'abeilles. Un tel amortisseur ne permet pas le maintien de l'organe de retenue dans une position donnée, par exemple à la face arrière d'un panneau solaire, afin de ne pas générer des zones d'ombre sur les cellules photovoltaïques de celui-ci et, plus généralement, afin de ne pas perturber le fonctionnement de l'élément qui a été déployé.

En outre, pour effectuer des essais au sol dans des conditions différentes, il est nécessaire d'avoir à disposition plusieurs amortisseurs, répondant à la gamme d'énergies à absorber. De plus, ces amortisseurs sont des éléments consommables.

La présente invention vise notamment à pallier ces inconvénients.

Elle propose, pour ce faire, un système d'arrimage, en position repliée, d'un élément sur une structure, pouvant prendre soit ladite position repliée, soit une position déployée par rapport à la structure, ledit système comportant :
- un organe de retenue traversant l'élément en position repliée et relié d'un côté à ladite structure et en appui, de l'autre côté, sur un côté externe de l'élément ;
- des moyens pour rompre soit l'organe de retenue, soit sa liaison à ladite structure, lorsque l'on désire faire passer l'élément de sa position repliée à sa position déployée ; et
- un mécanisme comportant des moyens moteurs pour tirer en direction du côté externe, à travers l'élément, la partie correspondante de l'organe de retenue, après action desdits moyens de rupture, l'organe de retenue étant pourvu d'un renflement sur sa partie qui est tirée par les moyens moteurs,
le système étant caractérisé en ce qu'il comporte en outre un dispositif de maintien et d'amortissement de choc monté sur l'élément et comportant un fût pourvu d'un orifice traversant destiné à recevoir concentriquement l'organe de retenue, une pluralité de découpes étant pratiquées dans la paroi du fût, de manière à former une pluralité de languettes élastiques susceptibles d'être repliées en tout ou partie vers l'intérieur du fût, afin de venir en contact avec la partie de l'organe de retenue qui est tirée par les moyens moteurs, le renflement étant adapté à coopérer avec lesdites languettes pour maintenir l'organe de retenue après action des moyens moteurs.

Grâce à ces dispositions, l'amortissement du choc dû à l'éjection de l'organe de retenue, ainsi que le maintien de l'organe de retenue dans une position voulue est réalisée par un dispositif unique et composé d'une seule pièce.

En outre, grâce à la possibilité de replier les lamelles élastiques en tout ou partie vers l'intérieur du fût, de nombreux réglages sont possibles, permettant une absorption du choc en fonction du besoin.

Par ailleurs, l'énergie qui peut être absorbée par le dispositif couvre une très large gamme.

Dans un mode de réalisation préféré, les lamelles sont susceptibles d'être ramenées dans leur position d'origine, au sein de l'enveloppe définie par le fût.

Pour ce faire, le dispositif de retenue et d'amortissement peut être usiné dans un matériau très élastique. Il est ainsi réalisé un dispositif non consommable et, partant, réutilisable.

Selon des dispositions préférées, éventuellement combinées :
- les découpes sont en forme de U inversé ;
- Les languettes élastiques sont mutuellement décalées dans le sens longitudinal du fût ;
- les languettes élastiques sont agencées en quinconce ;
- le fût comporte, à l'une de ses extrémités, une saillie annulaire pénétrant dans l'orifice, perpendiculairement à l'axe longitudinal du fût, et ayant une extrémité interne présentant, en élévation, un profil arrondi ;
- le fût est réalisé en un alliage de cuivre et de béryllium ;
- le renflement présente une forme évolutive permettant l'utilisation de l'organe de retenue dans différentes conditions de mise en oeuvre ;
- l'élément est un panneau externe d'un ensemble de panneaux d'un générateur solaire, articulés entre eux, ainsi que sur la structure, les panneaux étant superposés dans la position repliée de l'ensemble et au moins sensiblement alignés les uns au bout des autres dans la position déployée de l'ensemble, et au moins un organe de retenue traversant les panneaux en position repliée et pourvu d'un renflement destiné à coopérer avec des languettes élastiques d'un dispositif de maintien et d'amortissement correspondant étant prévu ;
- le fût comporte une collerette externe permettant de bloquer le fût entre le panneau externe et celui directement adjacent, en position repliée ;
- le mécanisme comporte des moyens moteurs supplémentaires, dont l'action est de sens opposé à celle des moyens moteurs et est apte à ramener et à maintenir chaque organe de retenue libéré dans une position qui, par rapport audit panneau externe et au moins lorsque ledit ensemble est en position déployée, est au moins sensiblement la même que celle que l'organe de retenue occupait en position repliée de l'ensemble avant action des moyens de rupture et le fût comportant une collerette extérieure sur laquelle les moyens moteurs et les moyens moteurs supplémentaires prennent appui ;
- les moyens moteurs et les moyens moteurs supplémentaires sont des ressorts hélicoïdaux traversés par l'organe de retenue.

La présente invention a également trait au dispositif de retenue ou maintien en position en soi.

La présente invention va maintenant être décrite avec plus de détails en se référant aux dessins annexés, sur lesquels :
la figure 1 est une vue schématique partielle en élévation avec coupe transversale d'un ensemble de panneaux équipés d'un système d'arrimage conforme à un mode de réalisation de la présente invention ;
la figure 2 est une vue similaire à celle de la figure 1, montrant le système d'arrimage en fonctionnement ;
la figure 3 est une vue schématique en élévation avec coupe suivant l'axe de révolution, à échelle agrandie, du dispositif de maintien en position et d'amortissement mis en en oeuvre dans le système d'arrimage des figures 1 et 2 ; et
la figure 4 est une vue schématique en plan de la surface périphérique du dispositif de la figure 3.

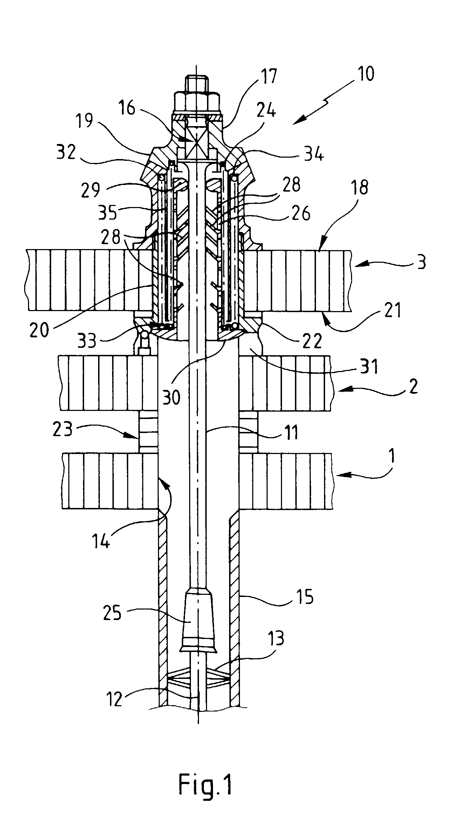

La figure 1 représente très partiellement un ensemble de trois panneaux de générateur solaire 1, 2 et 3, occupant une position repliée dans laquelle ils sont superposés, formant ainsi un empilement. Ils sont verrouillés dans cette position au moyen d'un système d'arrimage, qui sera décrit plus en détails ci-après.

Les articulations entre panneaux ne sont pas visibles sur les dessins. Elles relient des bords parallèles de panneaux et sont du type de celles décrites dans le document FR-A-2 635 077. La liaison en rotation du panneau interne 1 au corps du véhicule spatial n'a pas non plus été représenté.

On notera encore que ces panneaux 1, 2, 3 forment un générateur solaire et que le véhicule spatial est, en général, équipé de deux de ces générateurs, reliés à deux faces opposées de son corps et symétrique l'une de l'autre, aussi bien en position repliée, qu'en position déployée des panneaux, dans laquelle les panneaux sont au moins essentiellement alignés les uns au bout des autres.

Bien entendu, le nombre et la forme des panneaux peuvent être différents. Il en est de même du nombre d'ensembles de panneaux solaires agencés sur le véhicule spatial. En outre, l'application du système d'arrimage à l'ensemble de panneaux solaires n'est pas limitative. Ce système d'arrimage peut, en particulier, être utilisé pour arrimer un appendice spatial quelconque d'un véhicule spatial au corps de ce véhicule.

Ce système d'arrimage 10 de l'ensemble de panneaux 1-3 en position repliée, comporte au moins un organe de retenue 11, tel que par exemple une tige ou un tirant dont une extrémité interne 12 est solidaire du corps du véhicule spatial et est disposée en regard de moyens de rupture 13, par exemple de type pyrotechnique, également solidaires du corps du véhicule spatial.

Des passages, dont chacun traverse un panneau 1-3, forment par juxtaposition, en position repliée de ces panneaux, un passage continu 14 pour l'organe de retenue 11.

Une butée 15 solidaire de la structure ou corps du véhicule spatial sert de support à l'ensemble des panneaux 1-3. A l'extrémité externe 16 de l'organe de retenue 11, il est fixé un élément de butée 17 venant en appui sur la face externe 18 du panneau externe 3, via un élément de butée intermédiaire 19.

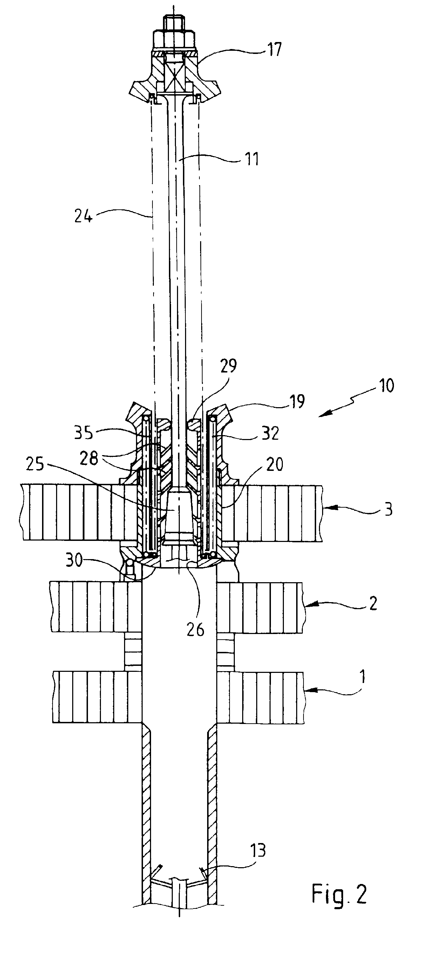

Cet élément intermédiaire 19 est emmanché sur une pièce cylindrique 20, disposée concentriquement à l'organe de retenue 11 et dépassant des deux côtés du panneau 3. Cette pièce cylindrique 20 se termine, du côté de la face interne 21 du panneau 3, par une saillie annulaire externe 22. Un système à butées 23, fixant l'écartement entre les panneaux 1 et 2 est également visible sur ces figures 1 et 2. L'écartement entre les panneaux 2 et 3 est, quant à lui, notamment fixé par la saillie annulaire 22.

Grâce à ces dispositions, les panneaux 1-3 sont maintenus rigidement, en position repliée, non seulement entre eux, mais encore par rapport au corps du véhicule spatial.

Les moyens de rupture 13 sont aptes, lorsqu'ils sont actionnés, à désolidariser l'organe de retenue 11 du véhicule spatial, autorisant ainsi le passage des panneaux solaires de la position repliée (figure 1, où les panneaux sont par exemple parallèles à l'axe longitudinal du véhicule spatial) à la position déployée (position non représentée, où les panneaux sont par exemple orthogonaux à l'axe longitudinal du véhicule spatial), par exemple spontanément sous l'action de ressorts incorporés aux articulations précitées.

Afin d'éviter que l'organe de retenue 11 ne détériore les panneaux 1-3 lorsque ceux-ci passent de leur position repliée à leur position déployée, le système d'arrimage comporte, de façon connue, un mécanisme d'extraction à moyen élastique moteur pour tirer à travers les panneaux solaires 1-3, et en direction de la face externe 18 du panneau 3, la partie correspondante de l'organe de retenue 11, après action des moyens de rupture 13.

Plus précisément, ce mécanisme comporte un ressort hélicoïdal 24 qui est bandé en position repliée de l'ensemble de panneaux solaires 1-3. Après actionnement des moyens de rupture pyrotechniques 13, ce ressort 24 libère son énergie et se détend pour reprendre son état détendu (figure 2) en tirant l'organe de retenue 11 par l'extrémité 16 vers l'extérieur du panneau externe 3, dans une position éloignée par rapport au véhicule spatial. Les panneaux solaires 1-3 peuvent alors se déployer autour de leurs articulations respectives.

L'organe de retenue 11 comporte, par ailleurs, un renflement 25 pour stopper le déplacement de l'organe de retenue 11, dû à l'effet du ressort d'extraction 24.

Ce renflement 25 est prévu sur la partie de l'organe de retenue 11 tiré par le ressort 24, au voisinage de la zone de rupture provoquée par les moyens de rupture 13. Il a la forme d'un tronc de cône dont le sommet est dirigé vers l'extrémité supérieure 16 de l'organe de retenue 11.

En fin de course d'extraction (voir figure 2) de l'organe de retenue 11, ce renflement 25 vient coopérer avec un dispositif de maintien et d'amortissement de choc particulièrement original et monté sur le panneau externe 3.

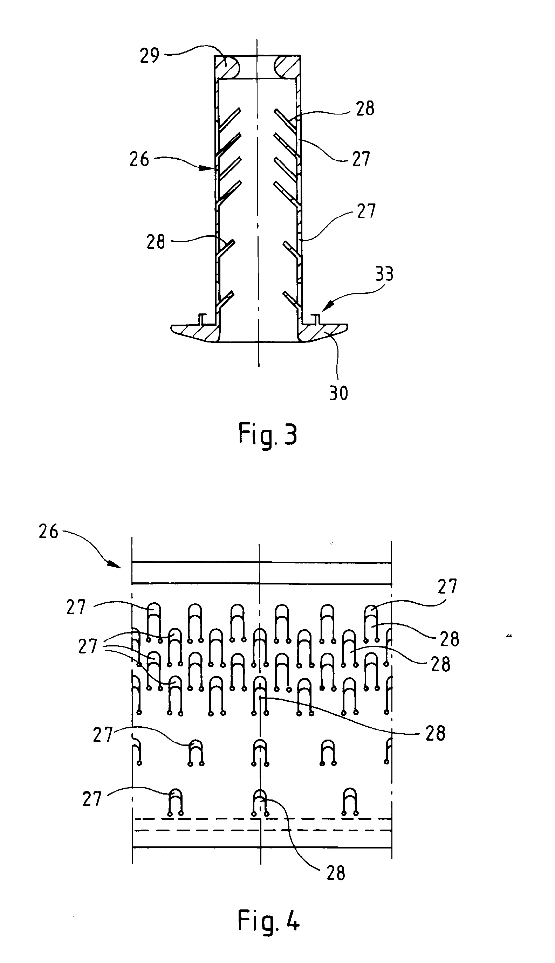

Comme on peut le voir sur les figures 3 et 4, ce dispositif comporte un fût 26 pourvu d'un orifice traversant recevant concentriquement l'organe de retenue 11. Ce fût 26 est lui-même disposé concentriquement et à l'intérieur de la pièce cylindrique 20. Une pluralité de découpes 27 (par souci de clarté, toutes les découpes visibles sur les dessins ne portent pas ce repère numérique) sont pratiquées dans la paroi du fût 26, de manière à former une pluralité de languettes 28 (comme pour les découpes 27, seule une partie des languettes porte le repère numérique 28 sur les dessins) susceptibles d'êtres repliées en tout ou partie vers l'intérieur du fût 26 afin de venir en contact avec la partie de l'organe de retenue 11 qui est tiré par le ressort d'extraction 24 et, en particulier, le renflement 25 qui vient coopérer avec ces languettes 28 pour maintenir l'organe de retenue 11 après action du ressort d'extraction 24. Pour rendre ces languettes 28 élastiques, elles ont été usinées dans un matériau très élastique, tel que par exemple un acier à ressort à base d'alliage de cuivre et de béryllium. Un tel matériau permet également de ramener les languettes 28 dans leur position d'origine, au sein de l'enveloppe définie par le fût 26, pour réutiliser le dispositif de maintien et d'amortissement de choc dans des conditions différentes.

En outre, comme on peut le voir sur la figure 4, les découpes 27 ont été réalisées sous forme de U inversés, les languettes élastiques 28 en résultant étant mutuellement décalées dans le sens longitudinal du fût 26. Plus précisément, ces languettes élastiques 28 sont agencées en quinconce. On observera, à cet égard, que les languettes 28 des quatre rangées supérieures sont moins espacées circonférentiellement et dans le sens longitudinal du fût 26 que les languettes 28 des rangées situées à l'extrémité inférieure du fût 26, c'est à dire à l'extrémité du fût 26 qui vient du côté de la face interne 21 du panneau 3.

Les languettes 28 de ces deux rangées inférieures sont par ailleurs plus courtes que les autres languettes, car elles sont destinées à venir en contact avec la base du tronc de cône formant le renflement 25.

Le fût 26 comporte, en outre, à son extrémité supérieure (extrémité en saillie de la face externe 18 du panneau 3 en configuration de montage du fût 26 sur le panneau 3) une saillie annulaire 29 pénétrant dans l'orifice formé par le fût 26, perpendiculairement à l'axe longitudinal du fût 26. Cette saillie 29 est destinée à guider la tige de l'organe de retenue 11 et présente, à cet effet, une extrémité interne présentant, en élévation, un profil arrondi.

Grâce à ces dispositions, les languettes élastiques 28 amortissent l'arrivée de l'organe de retenue sur le panneau externe 3 par frottement sur l'organe de retenue 11, puis arrêtent le renflement 25 qui vient se prendre dans les languettes 28 et qui est ainsi maintenu par ces languettes 28, c'est à dire tenu dans une même position. On évite ainsi des déplacements indésirables de l'organe de retenue 11 si celui-ci est soumis à des impulsions parasites et, en particulier, un retour vers sa position d'origine. Bien entendu, le dispositif de maintien et d'amortissement de choc est également à même d'amortir des chocs résultants de l'action des moyens de rupture 13.

De plus, ce dispositif permet de nombreux réglages qui sont fonction du nombre de languettes repliées vers l'intérieur du fût 26. On peut ainsi couvrir une très large gamme de chocs à amortir, en fonction du besoin. Cela est particulièrement intéressant lorsque l'on effectue des essais au sol, d'autant plus que le dispositif est réutilisable.

A cet égard, dans d'autres modes de réalisation, le renflement 25 pourra présenter une forme évolutive, permettant l'utilisation de l'organe de retenue 11 dans différentes conditions de mise en oeuvre.

Le fût 26 est également pourvu d'une collerette externe 30 à son extrémité inférieure, permettant notamment de bloquer celui-ci entre le panneau externe 3 et celui directement adjacent (panneau 2), en position repliée de l'ensemble de panneaux.

A cet égard, la collerette 30 prend appui, d'un côté, sur la saillie annulaire 22 et présente, de l'autre côté, une surface convexe venant en appui, en position repliée, sur une surface concave coïncidente d'une structure 31 disposée entre la collerette 30 et le panneau 2. Il est ainsi formé une rotule facilitant le déploiement du panneau 3 par rapport aux panneaux 1 et 2 après action du ressort d'extraction 24, qui prend d'ailleurs appui sur la collerette 30.

Lors de ce déploiement, qui n'a pas été représenté sur les figures, l'organe de retenue 11 peut être maintenu par le dispositif de maintien, du côté de la face externe 18 du panneau 3. Cela sera par exemple le cas lorsque le panneau 3 est devenu, lors d'une arrivée en configuration de transfert, le panneau externe. Dans ce cas, c'est la face 21 qui porte les cellules solaires du panneau 3 et il est donc souhaitable de maintenir l'organe de retenue 11 du côté de la face extérieure 18 qui est également la face arrière du panneau 3 dans ce cas, afin de ne pas générer de zone d'ombre sur ses cellules.

Par contre, lorsqu'on se trouve dans la situation où les cellules solaires se trouvent sur la face du panneau située du côté où est placé l'organe de retenue 11 après action du ressort d'extraction 24, il est prévu un moyen moteur supplémentaire. En l'espèce, ce moyen moteur supplémentaire est constitué par un ressort hélicoïdal d'escamotage 32, dont l'action est de sens opposé à celle du ressort 24 et est apte à ramener et à maintenir l'organe de retenue 11 du côté de la face 21 du panneau 3. En d'autres termes, l'organe de retenue se retrouve, lorsque l'ensemble de panneau est en position déployée, dans une position qui, par rapport au panneau 3, est sensiblement la même que celle qu'il occupait en position repliée de l'ensemble, avant action des moyens de rupture 13.

Pour ce faire, le ressort d'escamotage 32 prend appui sur la collerette 30 à l'une de ses extrémités, au niveau d'une structure 33 de retenue et de positionnement des ressorts. L'autre extrémité de ce ressort 34 vient en butée sur un épaulement de butée annulaire 34, faisant partie de l'élément intermédiaire 19. Plus précisément, cet épaulement de butée 34 est situé dans la zone de l'élément intermédiaire 19 contre laquelle vient buter l'élément de butée 17 de l'organe de retenue 11, en position repliée de l'ensemble de panneaux. Ce ressort 32 entoure le ressort 24, qui lui-même entoure le fût 26. Un moyen de guidage cylindrique 35 est ici également interposé entre les ressorts 24 et 32 pour les guider latéralement.

Par ailleurs, les ressorts 24 et 32 sont choisis pour que la force d'extension du ressort 32 soit supérieure à celle du ressort 24.

Ainsi, lorsque l'on désire obtenir le déploiement des panneaux 1 à 3, on actionne les moyens de rupture 13 qui sectionnent l'organe de retenue 11. Ensuite, le ressort 24 se détend et tire l'organe de retenue 11 à travers les panneaux 1 à 3, de sorte que celui-ci fait saillie à l'extérieur de la face externe 18 du panneau 3 (figure 2).

Le déploiement des panneaux 1 à 3 peut alors avoir lieu. On remarquera que, tant que les panneaux 2 et 3 restent en contact après rupture de l'organe de retenue 11, le ressort 32 reste bandé, puisque la collerette 30 est maintenue entre ceux-ci. En revanche, dès que les panneaux 2 et 3 sont écartés l'un de l'autre (déploiement non représenté sur les figures), la collerette 30 est libérée et le ressort 32 peut se détendre. L'organe de retenue 11 est alors tiré par le ressort 32, du fait de la poussée de ce dernier ressort sur la collerette 30 du fût 26 dans lequel est retenu l'organe de retenue 11. Lors du déploiement, l'organe de retenue 11 aura ainsi repris sa position initiale.

Bien entendu, la présente invention ne se limite nullement au mode de réalisation choisi et représenté sur les figures, mais englobe toute variante à la portée de l'homme du métier.

En particulier, les moyens moteurs qui sont en espèce constitués par des ressorts hélicoïdaux, pourront être remplacés par un système à alliage à mémoire de forme. Similairement, les moyens de rupture pourront également être constitués par un système à alliage à mémoire de forme.

En outre, la disposition et la forme des découpes 27 pourront être différentes et les languettes 28 pourront être inclinées différemment vers l'axe du fût 26, en fonction du besoin.

La configuration du fût 26 n'est pas non plus limitée à un cylindre à section circulaire.

## Revendications

1. Système d'arrimage, en position repliée, d'un élément sur une structure, pouvant prendre soit ladite position repliée, soit une position déployée par rapport à la structure, ledit système comportant :
- un organe de retenue (11) traversant l'élément en position repliée et relié d'un côté à ladite structure et en appui, de l'autre côté, sur un côté externe de l'élément ;
- des moyens pour rompre soit l'organe de retenue (11), soit sa liaison à ladite structure, lorsque l'on désire faire passer l'élément de sa position repliée à sa position déployée ; et
- un mécanisme comportant des moyens moteurs (24) pour tirer en direction du côté externe, à travers l'élément, la partie correspondante de l'organe de retenue (11), après action desdits moyens de rupture (13), l'organe de retenue (11) étant pourvu d'un renflement (25) sur sa partie qui est tirée par les moyens moteurs (24),
le système étant caractérisé en ce qu'il comporte en outre un dispositif de maintien et d'amortissement de choc monté sur l'élément et comportant un fût (26) pourvu d'un orifice traversant destiné à recevoir concentriquement l'organe de retenue (11), une pluralité de découpes (27) étant pratiquées dans la paroi du fût (26), de manière à former une pluralité de languettes élastiques (28) susceptibles d'être repliées en tout ou partie vers l'intérieur du fût (26), afin de venir en contact avec la partie de l'organe de retenue (11) qui est tirée par les moyens moteurs (24), le renflement (25) étant adapté à coopérer avec lesdites languettes pour maintenir l'organe de retenue (11) après action des moyens moteurs (24).

2. Système selon la revendication 1, caractérisé en ce que les languettes sont susceptibles d'être ramenées dans leur position d'origine, au sein de l'enveloppe définie par le fût (26).

3. Système selon la revendication 2, caractérisé en ce que les découpes (27) sont en forme de U inversé.

4. Système selon l'une quelconque des revendications 1 à 3, caractérisé en ce que les languettes élastiques (28) sont mutuellement décalées dans le sens longitudinal du fût (26).

5. Système selon la revendication 4, caractérisé en ce que les languettes élastiques (28) sont agencées en quinconce.

6. Système selon l'une quelconque des revendications 1 à 5, caractérisé en ce que le fût (26) comporte, à l'une de ses extrémités, une saillie annulaire pénétrant dans l'orifice, perpendiculairement à l'axe longitudinal du fût (26), et ayant une extrémité interne présentant, en élévation, un profil arrondi.

7. Système selon l'une quelconque des revendications précédentes, caractérisé en ce que le fût (26) est réalisé en un alliage de cuivre et de béryllium.

8. Système selon l'une quelconque des revendications précédentes, caractérisé en ce que le renflement (25) présente une forme évolutive permettant l'utilisation de l'organe de retenue (11) dans différentes conditions de mise en oeuvre.

9. Système selon l'une quelconque des revendications précédentes, caractérisé en ce que l'élément est un panneau externe d'un ensemble de panneaux (1-3) d'un générateur solaire, articulés entre eux, ainsi que sur la structure, les panneaux (1-3) étant superposés dans la position repliée de l'ensemble et au moins sensiblement alignés les uns au bout des autres dans la position déployée de l'ensemble, et au moins un organe de retenue (11) traversant les panneaux (1-3) en position repliée et pourvu d'un renflement (25) destiné à coopérer avec des languettes élastiques (28) d'un dispositif de maintien et d'amortissement correspondant étant prévu.

10. Système selon la revendication 9, caractérisé en ce que le fût (26) comporte une collerette externe (30) permettant de bloquer le fût (26) entre le panneau externe et celui directement adjacent, en position repliée.

11. Système selon la revendication 9, caractérisé en ce que ledit mécanisme comporte des moyens moteurs (32) supplémentaires, dont l'action est de sens opposé à celle des moyens moteurs (24) et est apte à ramener et à maintenir chaque organe de retenue (11) libéré dans une position qui, par rapport audit panneau externe et au moins lorsque ledit ensemble est en position déployée, est au moins sensiblement la même que celle que l'organe de retenue (11) occupait en position repliée de l'ensemble avant action des moyens de rupture (13) et le fût (26) comportant une collerette extérieure sur laquelle les moyens moteurs (24) et les moyens moteurs supplémentaires prennent appui.

12. Système selon la revendication 11, caractérisé en ce que les moyens moteurs (24) et les moyens moteurs (32) supplémentaires sont des ressorts hélicoïdaux traversés par l'organe de retenue (11).

13. Dispositif de maintien et d'amortissement destiné à être intégré à un système d'arrimage conforme à l'une quelconque des revendications précédentes, comportant un fût (26) pourvu d'un orifice traversant, une pluralité de découpes (27) étant pratiquées dans la paroi du fût (26) de manière à former une pluralité de languettes élastiques (28) susceptibles d'être repliées en tout ou partie vers l'intérieur du fût (26).

14. Dispositif selon la revendication 13, caractérisé en ce que les languettes sont susceptibles d'être ramenées dans leur position d'origine, au sein de l'enveloppe définie par le fût (26).

15. Dispositif selon la revendication 13 ou 14, caractérisé en ce que le fût (26) est réalisé en un alliage de cuivre et de béryllium.
